# FASCICULE DE BREVET EUROPEEN

(11) **EP 3 306 576 B1**
(45) Date de publication et mention de la délivrance du brevet: **15.03.2023**
(21) Numéro de dépôt: 16192418.8
(22) Date de dépôt: 05.10.2016
(51) Int. Cl.: G07C 9/00, B60R 25/00

(54) **PROCÉDÉ ET SYSTÈME D'ACCÈS SECURISÉ À UN ESPACE DÉTERMINÉ AU MOYEN D'UN OBJET PORTABLE**
VERFAHREN UND SYSTEM ZUM GESICHERTEN ZUGANG ZU EINEM BESTIMMTEN RAUM MITTELS EINES TRAGBAREN OBJEKTS
METHOD AND SYSTEM FOR SECURE ACCESS TO A DETERMINED SPACE BY MEANS OF A PORTABLE OBJECT

(43) Date de publication de la demande: 11.04.2018
(73) Titulaire: The Swatch Group Research and Development Ltd, 2074 Marin (CH)
(72) Inventeur: Casagrande, Arnaud, 2014 Bôle (CH); Velásquez, Carlos, 2000 Neuchâtel (CH); DUC, Philippe, 1580 Avenches (CH)
(74) Mandataire: ICB SA

(56) Documents cités:
- EP-A2- 1 152 108
- WO-A2-01/25060
- US-A1- 2009 006 032
- US-A1- 2010 265 035
- US-A1- 2016 112 846
- US-B1- 6 538 560

## Description

### Domaine de l'invention

L'invention concerne un procédé d'accès sécurisé à un espace déterminé, tel qu'à un véhicule, au moyen d'un objet portable personnalisé, tel qu'une clé électronique personnalisée.

L'invention concerne un système d'accès sécurisé pour la mise en oeuvre du procédé d'accès sécurisé.

### Arrière-plan de l'invention

Dans le domaine d'accès sécurisé à un espace déterminé, tel qu'à des véhicules, il est connu d'utiliser pour les véhicules un système d'entrée par une clé intelligente à transmission de commandes sans fil. Au moyen du système d'accès, il est possible d'autoriser l'accès à cet espace à une personne portant un objet portable personnalisé, tel qu'une clé électronique sur la base d'un contrôle ou d'authentification de la clé électronique personnalisée. Un signal d'interrogation peut tout d'abord être transmis depuis un dispositif d'autorisation d'accès ou de déverrouillage du véhicule à destination de la clé électronique personnalisée. Dès réception de ce signal d'interrogation, la clé électronique peut être activée et un calcul d'un signal réponse est effectué dans ladite clé électronique avant une transmission codée au dispositif d'autorisation d'accès du véhicule. Un contrôle est par la suite effectué dans le dispositif d'accès du véhicule pour déterminer si la clé est bien reconnue pour l'ouverture dudit véhicule.

Pour le contrôle d'accès par exemple à un véhicule au moyen d'une clé intelligente électronique, il peut être tout d'abord activé le dispositif de déverrouillage du véhicule par une action mécanique par exemple sur la poignée de la porte du véhicule. Dès cet instant, le dispositif de déverrouillage transmet un signal codé d'interrogation, qui est reçu par la clé électronique afin de l'activer. La clé électronique peut être alimentée par sa propre source d'énergie, telle qu'une batterie. Généralement ce signal d'interrogation est transmis du véhicule à une basse fréquence porteuse, alors que le signal codé de réponse de la clé électronique est transmis à une haute fréquence porteuse.

La clé électronique comprend une unité de traitement ou une unité de traitement numérique, qui est reliée à des moyens de mémorisation dans lesquels sont mémorisés par exemple un algorithme de chiffrement et/ou un code d'identification pour l'accès au véhicule. Une fois activée par le signal codé d'interrogation, la clé électronique transmet son signal codé d'identification au véhicule, pour une commande de verrouillage ou de déverrouillage de parties ou fonctions du véhicule.

Pour faciliter l'accès au véhicule sans devoir manipuler la clé électronique, il a déjà été proposé une clé électronique, dont un signal réponse est transmis automatiquement au véhicule en fonction d'un signal d'interrogation reçu du véhicule. Pour cela, la clé doit se trouver dans une zone restreinte autour du véhicule pour pouvoir recevoir ce signal d'interrogation provenant du véhicule. De plus, la clé ne transmet un signal réponse au véhicule, que si le signal d'interrogation a été reconnu par la clé. Ce signal réponse permet ainsi de commander le verrouillage ou le déverrouillage de parties ou fonctions du véhicule.

Les limites de réception des signaux sont déterminées par les caractéristiques de propagation des signaux radiofréquences utilisés pour les échanges d'information et par les caractéristiques de puissance émise et sensibilité des émetteurs-récepteurs utilisés dans le véhicule et dans la clé. La zone restreinte autour du véhicule est généralement définie par un seuil de puissance reçue minimale.

Avec une telle clé électronique commandée automatiquement par le signal d'interrogation provenant du véhicule, il y a le risque de permettre l'ouverture du véhicule par le biais de relais intermédiaires à l'insu du porteur de la clé électronique. De ce fait, cela donne la possibilité à des personnes mal intentionnées d'utiliser ces relais intermédiaires entre le véhicule et le porteur de la clé électronique pour ouvrir le véhicule et le mettre en marche. Ces relais sont en mesure de reproduire à destination de la clé, respectivement du véhicule, le signal codé d'interrogation, respectivement le signal codé réponse, qui comprennent chacun une séquence de données binaires.

Un premier relais intermédiaire d'une première personne mal intentionnée est à proximité du véhicule pour recevoir un signal d'interrogation du véhicule. Ce signal d'interrogation est converti en un signal radiofréquence pour une transmission à un second relais intermédiaire d'une seconde personne mal intentionnée, qui se situe à proximité du porteur de la clé électronique personnalisée au véhicule à ouvrir et mettre en marche. Le second relais intermédiaire convertit à nouveau le signal radiofréquence du premier relais intermédiaire en un nouveau signal d'interrogation à basse fréquence. La clé électronique personnalisée portée par la personne autorisée à accéder au véhicule reçoit le nouveau signal d'interrogation et transmet après reconnaissance de ce signal d'interrogation, un signal codé d'identification de réponse à haute fréquence. Ce signal réponse radiofréquence de la clé électronique peut être reçu directement par le dispositif de déverrouillage du véhicule, si la distance au véhicule est faible par exemple à moins de 50 m. Par contre, si la distance entre la clé électronique et le véhicule est bien plus grande par exemple au-dessus de 1 km, il doit y avoir encore un échange de signaux radiofréquences de la clé et par l'intermédiaire des deux relais intermédiaires à destination du véhicule.

Les systèmes d'accès sécurisés connus de l'état de la technique rencontrent plusieurs problèmes pour assurer l'ouverture du véhicule uniquement par la clé électronique personnalisée. Il est généralement difficile de déterminer notamment la distance séparant la clé électronique du véhicule pour n'autoriser l'ouverture du véhicule que par la clé électronique à courte distance du véhicule. Cela constitue un inconvénient des systèmes d'accès sécurisés de l'état de la technique.

Le brevet EP 673 003 B1 décrit un système d'accès sécurisé à un véhicule au moyen d'une clé électronique. Suite à une action sur la poignée du véhicule, le dispositif de déverrouillage du véhicule transmet un signal codé d'interrogation pour la clé, qui le reçoit et transmet un signal codé de réponse au dispositif de déverrouillage. En cas de coïncidence entre le code réponse transmis par la clé et un code de consigne du dispositif de déverrouillage, une autorisation d'accès au véhicule est effectuée. Un dispositif de détection de distance est encore prévu pour mesurer la distance entre la clé et le véhicule pour permettre à la clé de transmettre le code réponse uniquement au voisinage du véhicule. Un tel système d'accès sécurisé ne s'affranchit pas d'éventuels relais intermédiaires pour l'ouverture non autorisée du véhicule, ce qui constitue un inconvénient.

Le brevet US 6,538,560 B1 décrit un système d'accès à un dispositif de déverrouillage d'un véhicule via une clé électronique à transpondeur. Le dispositif du véhicule transmet un signal codé à basse fréquence pour activer la clé électronique et lui permettre d'activer son unité d'émission et réception à haute fréquence. Par la suite, un signal d'interrogation codé à haute fréquence est transmis et reçu par la clé, qui doit contrôler sa validité. Un traitement du signal codé à basse fréquence est effectué dans la clé pour permettre de transmettre un signal réponse codé à haute fréquence en tenant compte de l'identification du transmetteur. Le dispositif du véhicule reçoit le signal codé à haute fréquence de la clé pour contrôler sa validité et autoriser l'accès au véhicule dans l'affirmative. Un traitement du signal codé reçu du dispositif de déverrouillage du véhicule doit être effectué dans la clé, ce qui nécessite une circuiterie dans la clé compliquée et augmente la consommation électrique de la clé alimentée par batterie, ce qui constitue un inconvénient.

Dans l'état de la technique, il est encore connu d'utiliser un système de communication de type UWB pour autoriser l'accès à un véhicule par une clé intelligente électronique. Avec ce type de communication UWB, il est déterminé précisément le temps de vol des signaux du véhicule à la clé et de la clé au véhicule, et donc la distance entre les deux entités. Par contre, ce type de lien radiofréquence impose aussi l'utilisation d'un microprocesseur de traitement de signaux numériques (DSP) aussi bien dans le dispositif de déverrouillage du véhicule, que dans la clé électronique. Cela nécessite une technologie complexe et donc une forte consommation électrique. Cela constitue donc un inconvénient d'un tel système d'accès. De plus, dans un tel système, la phase de mesure de distance se distingue généralement de la phase d'authentification, ce qui permet une attaque potentielle, dans laquelle uniquement la phase de mesure de distance pourrait être piratée.

La demande de brevet US 2010/0265035 A1 décrit un procédé d'accès sécurisé dans un véhicule à moteur via clé électronique avec des moyens pour autoriser l'accès afin de s'affranchir de tout relais intermédiaire utilisé par des personnes mal intentionnées. Un signal d'activation est transmis à la clé électronique, qui le vérifie et transmet un signal réponse à haute fréquence au véhicule. Une composante temporelle T2 est prise en compte pour la réception et vérification. Cela nécessite une circuiterie compliquée dans la clé et augmente sa consommation électrique, ce qui constitue un inconvénient.

### Résumé de l'invention

L'invention a donc pour but de proposer un procédé d'accès sécurisé à un espace déterminé, au moyen d'un objet portable personnalisé pour pallier les inconvénients de l'état de la technique, pour l'accès facilité et sûr à l'espace déterminé par l'intermédiaire de l'objet portable lors de la transmission d'au moins un signal réponse.

A cet effet, l'invention concerne un procédé d'accès sécurisé à un espace déterminé, au moyen d'un objet portable personnalisé, qui comprend les caractéristiques mentionnées dans la revendication indépendante 1.

Des étapes particulières du procédé sont mentionnées dans les revendications dépendantes 2 à 14.

Un avantage du procédé réside dans le fait qu'il est déterminé des temps de communication ou temps de vol par des signaux transmis entre le dispositif d'accès d'un espace déterminé et l'objet portable personnalisé. Comme une bonne maîtrise de la temporisation dans le dispositif d'accès ou de déverrouillage et dans l'objet portable est obtenue pour la gestion des signaux, il est facile lors de la réponse de l'objet portable de déterminer la distance séparant l'objet portable du dispositif d'accès ou de déverrouillage de manière assez précise. Cela permet de rejeter toute requête provenant de relais intermédiaires, lorsque la distance déterminée excède un seuil déterminé. Ainsi, cela évite l'accès par des relais intermédiaires de personnes mal intentionnées à l'espace déterminé.

Avantageusement les signaux codés transmis peuvent être à haut débit par exemple à 26 Mbits/s ou 125 Mbits/s. Avec de tels hauts débits, les flancs des données dans le signal transmis et reçu sont plus raides qu'avec un débit moyen. De ce fait, il peut être obtenu une plus grande précision de détermination de distance séparant l'objet portable du dispositif d'accès ou de déverrouillage. Cela permet de garantir une plus grande sécurité pour autoriser l'accès à l'espace déterminé par un objet portable personnalisé.

Avantageusement, des fenêtres de réception de signaux bien définies dans le temps suite à la synchronisation du dispositif et de l'objet portable, permettent de recevoir complètement le signal réponse transmis par l'objet portable ou par le dispositif de déverrouillage. Cela permet d'empêcher l'accès à l'espace déterminé par des relais intermédiaires en relation avec l'objet portable interrogé.

Une grande partie du contrôle d'accès sécurisé de l'objet portable, tel que la clé électronique est effectué dans une unité de traitement de signaux numériques dans le dispositif d'accès ou de déverrouillage de l'espace déterminé, tel qu'un véhicule. Cela simplifie grandement la circuiterie de la clé électronique, ce qui réduit également sa consommation électrique, comme elle est alimentée par une batterie de petite dimension. De plus comme le lien de communication utilisé est de type bande étroite principalement sur une seule fréquence de communication, cela simplifie également les composants radiofréquences utilisés. La clé électronique n'est activée qu'au moment du contrôle d'accès sécurisé au véhicule.

Le système d'accès sécurisé utilise une technologie radiofréquence à bande étroite, qui peut être implémentée dans des bandes industrielles, scientifiques et médicales (ISM) sans licence. Le système présente des antennes à bande étroite, qui présentent un gain supérieur à celui des antennes d'un système UWB, ce qui rend le système de la présente invention pour la mise en oeuvre du procédé d'accès sécurisé plus économique que la technologie UWB.

A cet effet, l'invention concerne également un système d'accès sécurisé pour la mise en oeuvre du procédé d'accès sécurisé, qui comprend les caractéristiques mentionnées dans la revendication indépendante 15.

Des formes particulières du système d'accès sont définies dans les revendications dépendantes 16 à 19.

### Brève description des dessins

Les buts, avantages et caractéristiques du procédé et du système d'accès sécurisé à un espace déterminé, tel qu'à un véhicule, au moyen d'un objet portable personnalisé, tel qu'une clé électronique, apparaîtront mieux dans la description suivante par les dessins sur lesquels :
la figure 1 représente une forme d'exécution d'un système d'accès sécurisé à un espace déterminé pour la mise en oeuvre du procédé d'accès selon l'invention,
la figure 2 représente différents signaux émis et reçus entre le dispositif d'accès et l'objet portable du système d'accès de la figure 1 selon une première variante du procédé d'accès sécurisé selon l'invention,
la figure 3 représente différents signaux émis et reçus entre le dispositif d'accès et l'objet portable du système d'accès de la figure 1 selon une seconde variante du procédé d'accès sécurisé selon l'invention,
la figure 4 représente différents signaux émis et reçus entre le dispositif d'accès et l'objet portable du système d'accès de la figure 1 selon une troisième variante du procédé d'accès sécurisé selon l'invention, et
la figure 5 représente différents signaux émis et reçus entre le dispositif d'accès et l'objet portable du système d'accès de la figure 1 selon une quatrième variante du procédé d'accès sécurisé selon l'invention.

### Description détaillée de l'invention

Dans la description suivante, tous les composants du système d'accès sécurisé pour la mise en oeuvre du procédé d'accès sécurisé, qui sont bien connus d'un homme du métier dans ce domaine technique, ne sont décrits que de manière simplifiée.

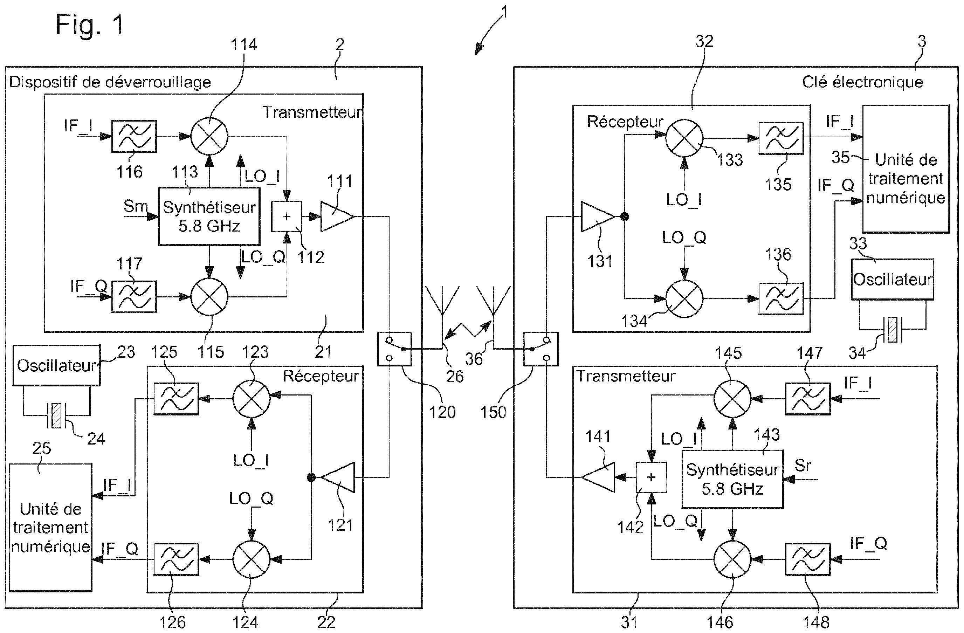

La figure 1 représente une forme d'exécution du système d'accès sécurisé 1 à un espace déterminé d'un objet portable pour la mise en oeuvre du procédé d'accès sécurisé. Dans cette forme d'exécution du système d'accès sécurisé 1, l'espace déterminé est un véhicule muni d'un dispositif d'accès ou de déverrouillage 2 du véhicule, et l'objet portable est de préférence une clé intelligente électronique 3 pour être portée par un utilisateur du véhicule.

Bien entendu, il peut s'agir d'un autre espacé déterminé, tel qu'un bus, une chambre d'un bâtiment sécurisé, un coffre-fort ou tout autre espace n'autorisant l'entrée qu'à des personnes autorisées avec leur objet portable personnalisé. De plus, l'objet portable 3 peut également être une carte ou un badge, une montre, une bague, un téléphone portable ou tout autre objet pouvant comprendre un circuit électronique capable d'établir une communication avec le dispositif d'accès ou de déverrouillage 2.

Selon le procédé d'accès sécurisé au véhicule par la clé électronique 3, il doit être détecté assez précisément la distance séparant la clé électronique personnalisée 3 du dispositif d'accès ou de déverrouillage 2. Dès l'activation de la clé électronique 3, une transmission et réception en décalage temporel ou en différé de signaux radiofréquences de commande ou de données, qui peuvent être codés, s'effectuent depuis le dispositif de déverrouillage 2 vers la clé électronique 3 et inversement. Une fusion de l'information de distance dans un signal réponse codé de la clé électronique 3 transmise au dispositif de déverrouillage 2 peut aussi être effectuée pour empêcher toute attaque par relais intermédiaires. Un traitement numérique des signaux est réalisé dans le dispositif de déverrouillage 2 de manière à reconnaître la clé électronique 3, ainsi qu'en partie dans la clé électronique 3, afin de permettre l'ouverture et la mise en marche du véhicule. Il est ainsi déterminé précisément dans le dispositif de déverrouillage 2, le temps de vol des signaux entre le dispositif et la clé et inversement, et de ce fait la distance séparant le dispositif d'accès et la clé électronique pour autoriser l'accès au véhicule.

Le dispositif d'accès ou de déverrouillage 2 du système d'accès 1 comprend notamment un transmetteur 21, un récepteur 22 et au moins une unité de traitement numérique des signaux 25, qui est reliée au transmetteur 21 et au récepteur 22. Dans cette forme d'exécution, une seule antenne 26 est reliée au transmetteur 21 et au récepteur 22 par l'intermédiaire d'un élément de commutation 120. L'élément de commutation 120 est un multiplexeur à deux entrées reliées respectivement au transmetteur 21 et au récepteur 22 et à une sortie reliée à l'antenne 26. Ce multiplexeur 120 est commandé par l'unité de traitement 25 pour permettre soit la transmission de signaux à haute fréquence par l'antenne 26 depuis le transmetteur 21, soit la réception de signaux à haute fréquence par l'antenne 26 vers le récepteur 22. Un oscillateur local 23, qui est de préférence un oscillateur à résonateur à quartz 24, est également prévu pour cadencer les opérations du dispositif de déverrouillage 2.

L'unité de traitement numérique 25 peut comprendre non représentés un microprocesseur cadencé par l'oscillateur local 23, une mémoire à plusieurs registres, un système de chiffrage symétrique ou asymétrique avec générateur de nombres aléatoires, ainsi qu'un système de gestion de clés de chiffrage. L'unité de traitement numérique 25 peut encore comprendre non représentés, un convertisseur analogique numérique ADC pour convertir les signaux intermédiaires en signaux numériques intermédiaires, un détecteur d'enveloppe des signaux numériques intermédiaires, un élément à retard, un générateur de modulation en fréquence de signaux. L'unité de traitement numérique 25 comprend encore un convertisseur numérique-analogique DAC pour convertir des signaux numériques à transmettre à la clé électronique 3.

La clé électronique 3 du système d'accès 1 comprend notamment un transmetteur 31, un récepteur 32 et au moins une unité de traitement numérique 35, qui est reliée au transmetteur 31 et au récepteur 32. Dans cette forme d'exécution, une seule antenne 36 est reliée au transmetteur 31 et au récepteur 32 par l'intermédiaire d'un élément de commutation 150. L'élément de commutation 150 est un multiplexeur à deux entrées reliées respectivement au transmetteur 31 et au récepteur 32 et à une sortie reliée à l'antenne 36. Ce multiplexeur 150 est commandé par l'unité de traitement numérique 35 pour permettre soit la transmission de signaux à haute fréquence par l'antenne 36 depuis le transmetteur 31, soit la réception de signaux à haute fréquence par l'antenne 36 vers le récepteur 32 comme pour le dispositif d'accès ou de déverrouillage 2.

Un oscillateur local 33, qui est de préférence un oscillateur à résonateur à quartz 34, est également prévu pour cadencer les opérations dans la clé électronique 3 et principalement le traitement par l'intermédiaire de l'unité de traitement numérique 35. Le signal d'oscillation de l'oscillateur local 33 peut être à une fréquence de l'ordre de 26 MHz ou à une fréquence divisée par un ensemble de diviseurs par deux. Cet oscillateur local 33 est similaire à l'oscillateur local 23 à résonateur à quartz 24 du dispositif de déverrouillage 2. Donc la fréquence du signal d'oscillation est sensiblement similaire à ± 40 ppm. Cela peut permettre d'avoir une bonne synchronisation de traitement dans le dispositif de déverrouillage 2 et dans la clé électronique 3 après une étape de calibration initiale ou durant le procédé d'accès sécurisé expliqué ci-dessous.

L'unité de traitement numérique 35 peut comprendre non représenté un processeur ou une machine d'état cadencé par l'oscillateur local 33, une mémoire à plusieurs registres, un système de chiffrement symétrique ou asymétrique avec générateur de nombres aléatoires, ainsi qu'un système de gestion de clés de chiffrage. L'unité de traitement numérique 35 peut aussi comprendre, non représentés, un convertisseur analogique numérique ADC pour convertir les signaux intermédiaires en signaux numériques intermédiaires, un détecteur d'enveloppe des signaux numériques intermédiaires, un élément à retard, un générateur de modulation en fréquence de signaux. L'unité de traitement numérique 35 comprend encore un convertisseur numérique-analogique pour convertir des signaux numériques à transmettre au dispositif de déverrouillage 2.

Suite à une commande d'activation provenant d'une poignée de porte du véhicule par exemple ou d'une commande transmise par la clé électronique 3, le transmetteur 21 du dispositif d'accès ou de déverrouillage 2 est capable de transmettre un signal de commande ou de données par l'antenne 26 à destination de l'antenne 36 de la clé électronique 3 expliquée en détail ci-après. Dans le cas d'une commande d'activation provenant du véhicule, le signal d'activation transmis par le dispositif est un signal à basse fréquence LF. Par contre, si la commande d'activation provient de la clé électronique 3, le dispositif d'accès ou de déverrouillage 2 à l'écoute va transmettre un signal de commande ou de données à haute fréquence. Cette haute fréquence dans cette forme d'exécution du système d'accès 1 peut être par exemple à une fréquence ISM à 5.8 GHz. Le récepteur 22 est capable de recevoir par l'antenne de réception 26 un signal radiofréquence à la même fréquence porteuse provenant de la clé électronique 3 interrogée.

Dans le dispositif d'accès ou de déverrouillage 2, le transmetteur 21 comprend un synthétiseur de fréquence 113, qui est utilisé aussi pour le récepteur 22. Le synthétiseur de fréquence 113 reçoit un signal de référence de l'oscillateur 23 à résonateur à quartz 24. Le synthétiseur de fréquence 113 est susceptible de fournir des signaux oscillants à haute fréquence à un premier mélangeur 114 et à un second mélangeur 115. Le premier mélangeur 114 reçoit depuis l'unité de traitement numérique 25 au moins un signal intermédiaire en phase IF_I, qui est filtré dans un filtre passe-bas 116 pour convertir en fréquence vers le haut ce signal intermédiaire par un premier signal oscillant du synthétiseur de fréquence 113. Le second mélangeur 115 reçoit depuis l'unité de traitement numérique 25 au moins un signal intermédiaire en quadrature IF_Q, qui est filtré dans un filtre passe-bas 117 pour convertir en fréquence vers le haut ce signal intermédiaire par un second signal oscillant du synthétiseur de fréquence 113. Le signal de sortie du premier mélangeur 114 et le signal de sortie du second mélangeur 115 sont additionnés dans un additionneur 112 du transmetteur 21. Un amplificateur de sortie 111 est relié en sortie de l'additionneur 112 pour amplifier le signal radiofréquence de sortie à transmettre par la première antenne 26 par l'intermédiaire du multiplexeur 120 en mode de transmission.

Il est à noter que le premier signal oscillant fourni par le synthétiseur de fréquence 113 du transmetteur 21 est un signal oscillant en phase, alors que le second signal oscillant est un signal oscillant en quadrature. Ceci est prévu pour un mélange respectif avec le signal intermédiaire filtré en phase IF_I et le signal intermédiaire filtré en quadrature IF_Q. Le synthétiseur de fréquence 113 est donc prévu pour générer des signaux oscillants en phase et en quadrature à une fréquence voisine de 5.8 GHz pour les deux mélangeurs 114, 115.

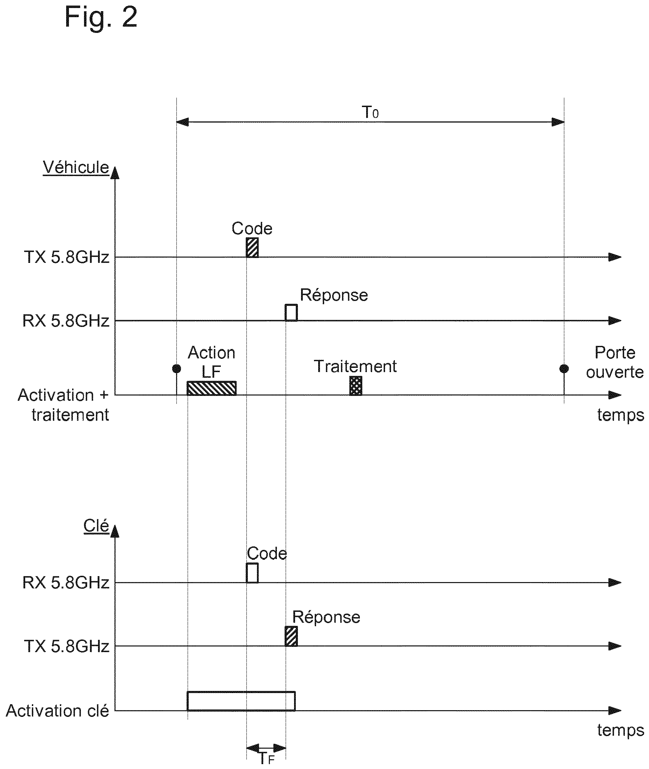

Chaque signal intermédiaire IF_I et IF_Q, comme expliqué ci-après en référence notamment aux figures 2 à 6, peut comprendre une modulation d'un code variable ou roulant, dit code de brassage ("rolling code" en terminologie anglaise), à transmettre par la première antenne 26 par l'intermédiaire du multiplexeur 120 en mode de transmission. Il peut s'agir d'une modulation de fréquence FSK ou GFSK pour ce code de brassage. Cependant, il peut aussi être envisagé de moduler la fréquence de chaque signal oscillant fourni par le synthétiseur 113 par un signal de modulation Sm transmis par l'unité de traitement numérique 25. Une modulation de phase PSK ou BPSK peut aussi être envisagée, ainsi qu'une modulation d'une séquence pseudo-aléatoire de bruit (PN) utilisée dans des étapes intermédiaires du procédé pour déterminer par exemple la distance entre le dispositif de déverrouillage 2 et la clé électronique 3.

Dans le dispositif d'accès ou de déverrouillage 2, le récepteur 22 comprend un amplificateur à faible bruit d'entrée 121 pour recevoir un signal radiofréquence de l'antenne 26 par l'intermédiaire du multiplexeur 120 en mode de réception. L'amplificateur à faible bruit d'entrée 121 du récepteur 22 permet d'amplifier et filtrer le signal radiofréquence reçu. Un premier mélangeur 123 du récepteur 22 est prévu pour convertir en fréquence le signal radiofréquence amplifié et filtré par un signal oscillant en phase LO_I provenant du synthétiseur de fréquence 113, afin de fournir un signal intermédiaire en phase IF_I. Ce signal intermédiaire en phase IF_I est filtré par un filtre passe-bas 125. Un second mélangeur 124 du récepteur 22 est prévu pour convertir en fréquence le signal radiofréquence amplifié et filtré par un signal oscillant en quadrature LO_Q du synthétiseur de fréquence 113, afin de fournir un signal intermédiaire en quadrature IF_Q. Le signal intermédiaire en quadrature IF_Q est filtré par un autre filtre passe-bas 126. Les signaux intermédiaires en phase IF_I et en quadrature IF_Q filtrés sont transmis à l'unité de traitement numérique 25.

Dans l'unité de traitement numérique 25, il y a tout d'abord un convertisseur analogique numérique ADC non représenté pour convertir les signaux intermédiaires en signaux numériques intermédiaires à traiter dans l'unité de traitement 25. L'unité de traitement 25 peut comprendre encore, non représentés, un détecteur d'enveloppe des signaux numériques intermédiaires, au moins une unité de mémorisation, telle qu'une mémoire non volatile ayant plusieurs registres, et un convertisseur numérique-analogique pour convertir des signaux numériques à transmettre. L'unité de traitement 25 est cadencée par un signal de cadencement fourni par l'oscillateur local 23, qui peut être à une fréquence de l'ordre de 26 MHz ou à une fréquence divisée par un ensemble de diviseurs par deux.

Dans la clé électronique 3, il n'y a également qu'un synthétiseur de fréquence 143 pour générer des signaux oscillants en phase et en quadrature à une fréquence voisine de 5.8 GHz. Dans le transmetteur 31 de la clé électronique 3, le synthétiseur de fréquence 143 fournit un signal oscillant en phase à un premier mélangeur 145 pour élever en fréquence le signal intermédiaire en phase IF_I à transmettre et qui est filtré dans un filtre passe-bas 147 en venant de l'unité de traitement numérique 35. Le synthétiseur de fréquence 143 fournit un signal oscillant en quadrature à un second mélangeur 146 pour élever en fréquence le signal intermédiaire en quadrature IF_Q à transmettre et qui est filtré dans un filtre passe-bas 148 en venant de l'unité de traitement numérique 35. Les signaux de sortie des deux mélangeurs sont additionnés dans un additionneur 142 avant d'être amplifiés par un amplificateur 141, dont la sortie est connectée à un élément de commutation 150 relié à l'unique antenne 36 de transmission et de réception de signaux. En fonction d'une commutation de transmission commandée à l'élément de commutation 150 notamment par l'unité de traitement numérique 35, il y a une transmission d'un signal fourni par le transmetteur 31 par l'antenne 36 dans le mode de transmission. Cet élément de commutation 150 est de préférence un multiplexeur à deux entrées et une sortie liée à l'antenne 36 avec une commande de commutation provenant de l'unité de traitement numérique 35 cadencée par un signal de cadencement provenant de l'oscillateur local 33. Une entrée du multiplexeur est reliée au transmetteur 31, alors qu'une autre entrée est reliée au récepteur 32.

Le récepteur 32 comprend un amplificateur à faible bruit 131 relié à une entrée du multiplexeur 150 en mode de réception. Le signal de sortie de l'amplificateur 131 est fourni à un premier mélangeur 133 et à un second mélangeur 134. Le synthétiseur de fréquence 143 fournit également un signal oscillant en phase LO_I pour le premier mélangeur 133 du récepteur 32 et un signal oscillant en quadrature LO_Q pour le second mélangeur 134 du récepteur 32. Un premier signal intermédiaire en phase IF_I est fourni en sortie du premier mélangeur 133 à une fréquence abaissée, et un second signal intermédiaire en quadrature IF_Q est fourni en sortie du second mélangeur 134 à une fréquence abaissée. Le signal intermédiaire en phase IF_I est filtré dans un filtre passe-bas 135 et transmis à l'unité de traitement numérique 35. Le signal intermédiaire en quadrature IF_Q est filtré dans un filtre passe-bas 136 et transmis à l'unité de traitement numérique 35.

Dans une phase initiale suite à la commande d'activation effectuée sur un élément du véhicule, il peut tout d'abord être transmis par la première antenne 26 du transmetteur 21, un signal d'activation à basse fréquence LF pour réveiller la clé électronique 3 à proximité du véhicule. Cependant, il peut aussi être envisagé d'activer ladite clé électronique 3 par un bouton poussoir qu'elle comprend ou par un autre organe de contrôle de ladite clé, comme une touche tactile. A la réception du signal d'activation de la clé électronique 3, le dispositif d'accès ou de déverrouillage 2 peut transmettre par exemple un signal d'interrogation à haute fréquence à la clé électronique 3. Les différentes étapes du procédé, qui suit cette phase initiale, sont expliquées plus en détail par la suite.

Il est à noter qu'il peut être prévu dans le dispositif de déverrouillage 2, un générateur pseudo-aléatoire de bruit comme décrit dans le brevet EP 2 796 988 B1 en référence à la figure 2 et paragraphes 33 à 37. Ce générateur peut être cadencé par l'oscillateur 23 afin de générer un code pseudo-aléatoire de bruit en liaison avec l'unité de traitement 25. Il peut aussi être prévu un tel générateur dans l'unité de traitement de la clé électronique 3. La génération d'un code de brassage est déjà connue dans le domaine de l'ouverture de portes de garage.

Selon une première variante du procédé d'accès sécurisé selon la figure 2, il doit au moins y avoir une transmission d'un premier signal codé, tel qu'un signal de base à code de brassage ou à modulation d'une séquence pseudo-aléatoire de bruit depuis le dispositif de déverrouillage 2 à la clé électronique 3. Ce signal de base codé peut être transmis après un intervalle de temps déterminé suite à l'activation LF de la clé électronique. Lors de la transmission du dispositif de déverrouillage, il peut être enclenché un temporisateur précis dans le dispositif cadencé par l'oscillateur à résonateur à quartz ou à une fréquence supérieure sur la base de l'oscillateur local par exemple à 250 MHz.

La clé électronique reçoit ce premier signal de base et le démodule en définissant le temps. Ensuite, la clé électronique génère un second signal codé, tel qu'un signal codé de réponse après un premier temps défini de transmission T_{F} bien déterminé depuis l'initiation du signal de base dans le dispositif de déverrouillage. Ce premier temps T_{F} défini de transmission, qui peut être de l'ordre de 0.1 ms, est obtenu par la temporisation suite à la réception du signal de base et grâce à un oscillateur local similaire à celui du dispositif de déverrouillage. Ce signal codé de réponse est reçu par le dispositif de déverrouillage. Un traitement est effectué en décalage temporel, c'est-à-dire après un laps de temps dans le dispositif de déverrouillage pour déterminer les temps de vol entre les deux entités et le premier temps défini de réponse de la clé électronique. Comme la temporisation est très précise dans le dispositif et dans la clé et que le signal de base et le signal codé de réponse sont transmis à haut débit par exemple à 26 Mbits/s, il est facile de déterminer la distance réelle séparant la clé électronique du véhicule. De plus, cela permet de garantir une très grande sécurité pour empêcher l'ouverture du véhicule par l'intermédiaire de relais intermédiaires de personnes mal intentionnées.

Au terme de la transmission du signal codé de réponse de la clé électronique 3, la clé électronique 3 peut être automatiquement désactivée et rester dans un mode de repos. Le contrôle de la temporisation et du code réponse de la clé électronique 3 peut se faire dans l'unité de traitement 25 à processeur du dispositif d'accès ou de déverrouillage 2 en différé après la désactivation de la clé électronique. Une commande d'ouverture de la porte du véhicule peut être commandée par la suite. Le temps T₀ entre l'activation de la clé électronique 3 et l'ouverture de la porte du véhicule peut être de l'ordre de 1 ms.

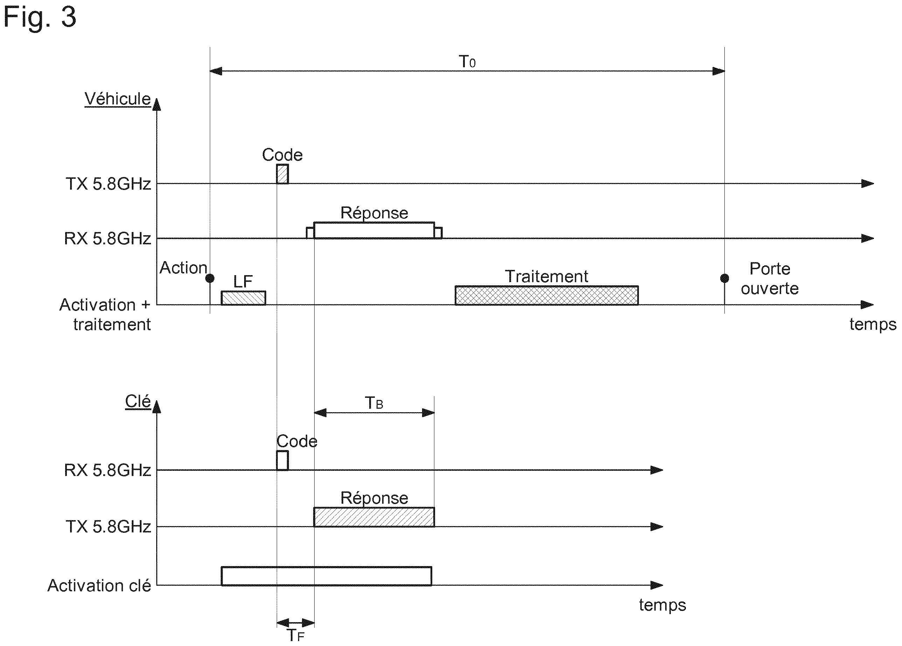

Selon une seconde variante du procédé d'accès sécurisé selon la figure 3, il y a une transmission d'un signal de base à code de brassage ou à modulation d'une séquence pseudo-aléatoire de bruit depuis le dispositif de déverrouillage 2 à la clé électronique 3. Comme précédemment, ce signal de base codé peut être transmis après un intervalle de temps déterminé suite à l'activation de la clé électronique. Dès la génération du signal de base pour sa transmission du dispositif de déverrouillage, il est enclenché un temporisateur précis dans le dispositif cadencé par l'oscillateur à résonateur à quartz ou à une fréquence supérieure sur la base de l'oscillateur local par exemple à 250 MHz.

La clé électronique reçoit ce signal de base codé et le démodule en définissant le temps. Ensuite, la clé électronique génère un signal codé de réponse après un premier temps défini de transmission T_{F} bien déterminé depuis l'initiation du signal de base Code dans le dispositif de déverrouillage. Ce premier temps T_{F} défini de transmission, qui peut être de l'ordre de 0.1 ms, est obtenu par la temporisation suite à la réception du signal de base et grâce à un oscillateur local similaire à celui du dispositif de déverrouillage.

Ce signal codé de réponse est un signal codé brouillé ("scrambled" en terminologie anglaise) avec une modulation supplémentaire sur le signal de base codé reçu ou un signal chiffré avec une clé de chiffrage symétrique ou asymétrique programmée ou générée auparavant. La génération de ce signal codé de réponse brouillé est plus longue que celui de la première variante du procédé d'accès. La modulation peut être à 1 Mbits/s dans le signal codé de réponse qui est à une fréquence par exemple de 5.8 GHz. La durée T_{B} de ce signal codé de réponse brouillé peut être de l'ordre de 0.25 ms.

Ce signal codé de réponse brouillé est reçu par le dispositif de déverrouillage dans une fenêtre temporelle de réception déterminée dans le dispositif de déverrouillage. Le dispositif est agencé pour recevoir dans cette fenêtre temporelle ou intervalle temporel, le signal codé de réponse brouillé. La durée de cette fenêtre temporelle de réception est équivalente à celle T_{B} du signal codé de réponse brouillé.

Après la réception complète du signal codé de réponse brouillé, un traitement est effectué dans l'unité de traitement du dispositif de déverrouillage. Dans l'unité de traitement, le signal codé de réponse reçu de la clé électronique est comparé avec la version générée localement sur la base du code initial. Après cela, il y a une détermination des temps de vol entre les deux entités, ainsi que le premier temps T_{F} défini de réponse de la clé électronique. Comme la temporisation est très précise dans le dispositif et dans la clé et que le signal de base et le signal codé de réponse sont transmis à haut débit par exemple à 26 Mbits/s, il est facile de déterminer la distance réelle séparant la clé électronique du véhicule. Cela garantit également l'accès au véhicule uniquement à la clé électronique à proximité dudit véhicule pour une grande sécurité.

Comme pour la première variante du procédé au terme de la transmission du signal codé de réponse brouillé de la clé électronique, la clé électronique peut être automatiquement désactivée pour rester dans un mode de repos. Une commande d'ouverture de la porte du véhicule peut être commandée par la suite après le traitement dans l'unité de traitement. Le temps T₀ entre l'activation de la clé électronique et l'ouverture de la porte du véhicule peut être de l'ordre de 10 ms.

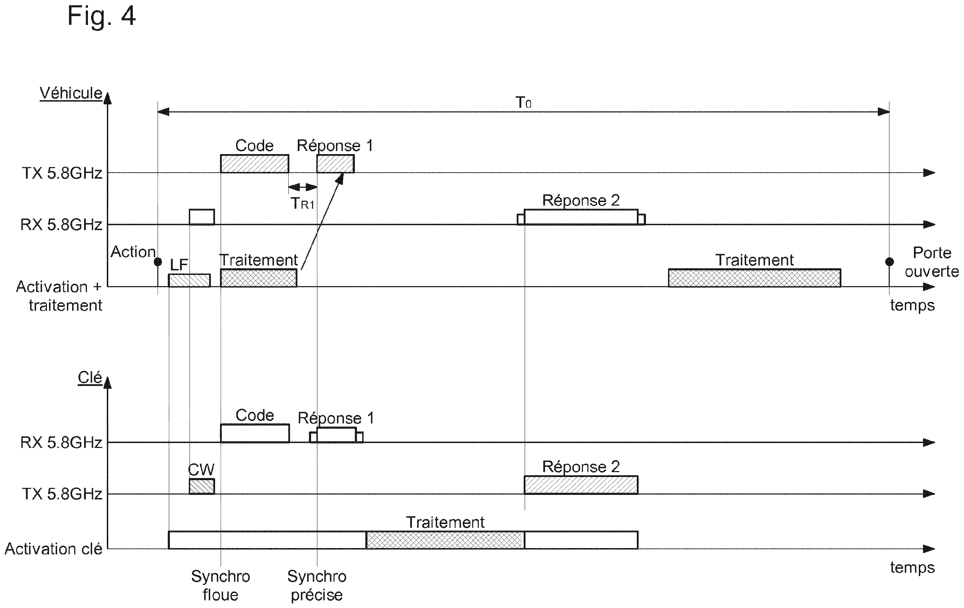

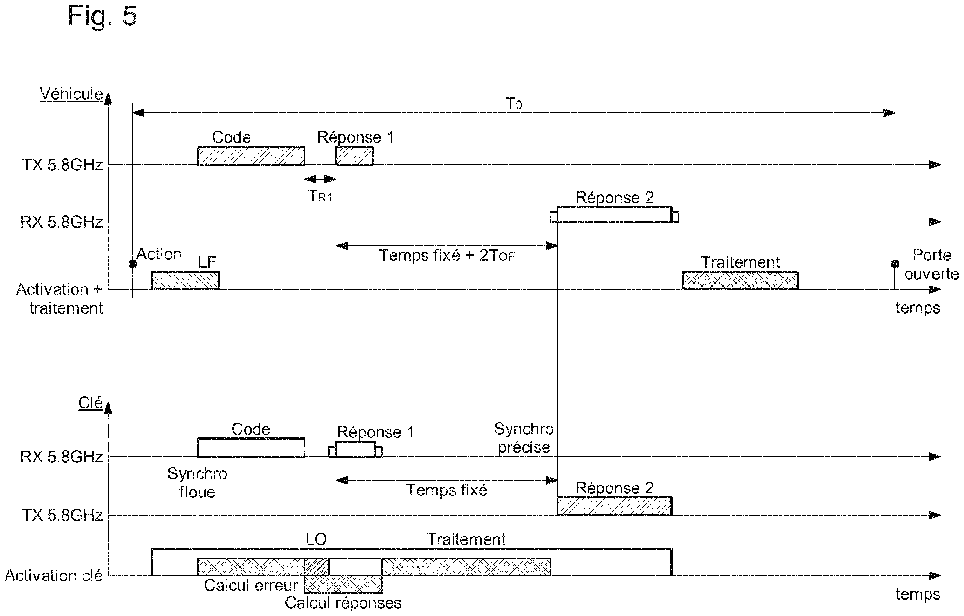

Dans les variantes du procédé d'accès sécurisé décrites en référence aux figures 4 et 5, il doit toujours y avoir une transmission d'un premier signal codé du dispositif de déverrouillage vers l'objet portable, qui est la clé électronique. Ensuite, il y a un signal codé de réponse transmis en différé par le dispositif de déverrouillage vers la clé électronique. Un traitement de l'information reçue dans la clé électronique, lui permet de transmettre un signal codé de réponse brouillé vers le dispositif de déverrouillage pour un contrôle et autorisation d'accès au véhicule en cas de reconnaissance de la clé électronique et de sa distance au véhicule.

Selon une troisième variante du procédé d'accès sécurisé selon la figure 4, il est prévu un double transfert à brouillage des données dans la clé électronique. Tout d'abord la clé électronique est activée par le signal à basse fréquence LF transmis par le dispositif de déverrouillage. Après l'activation de la clé électronique, il peut être prévu de transmettre depuis la clé électronique un signal continu à fréquence porteuse CW, qui est par exemple de l'ordre de 5.8 GHz. Le dispositif de déverrouillage reçoit ce signal à fréquence porteuse, qui va servir au calcul de l'erreur de fréquence de la clé électronique par exemple par une transformée rapide de Fourrier dans l'unité de traitement.

Le dispositif de déverrouillage transmet ensuite un signal de base Code, qui est un signal à code de brassage à moyen débit de l'ordre de 1 Mbits/s ou un signal à code de brassage ou aléatoire chiffré avec une clé symétrique ou asymétrique. Cette transmission du signal de base est plus longue que la transmission du signal de base des première et seconde variantes du procédé, par exemple de l'ordre de 1 ms. Avec un moyen débit de transmission, la détermination de distance est effectuée par la suite avec une précision moindre, mais avec une complexité des composants de traitement réduite.

La clé électronique reçoit ce signal de base codé, le démodule et le déchiffre afin de paramétrer l'analyse effectuée dans l'unité de traitement de la clé électronique. Comme les deux oscillateurs du dispositif et de la clé ne sont pas encore calibrés, la synchronisation à la réception du signal de base codé par la clé électronique est encore une synchronisation floue. Dès la réception du signal CW (envoyé par la clé), un calcul d'erreur de fréquence des oscillateurs est effectué dans l'unité de traitement du dispositif de déverrouillage.

Après correction de fréquence de l'oscillateur local du dispositif par exemple, une nouvelle transmission d'un premier signal codé de réponse Réponse 1 est effectuée du dispositif de déverrouillage en différé, c'est-à-dire après un temps déterminé T_{R1} suite à la transmission du signal de base à code de brassage. Le premier signal codé de réponse est transmis vers la clé électronique, cette transmission véhiculant une synchronisation précise. La clé électronique reçoit ce premier signal réponse brouillé du dispositif de déverrouillage par exemple dans une fenêtre temporelle de réception équivalente à la durée du premier signal codé de réponse.

Suite à la réception de ce premier signal codé de réponse brouillé, un traitement du premier signal réponse brouillé est effectué dans l'unité de traitement de la clé électronique. Un calcul d'un temps de départ par une corrélation du premier signal réponse brouillé attendu (décrypté depuis le code de brassage initial) est effectué. Cette corrélation permet d'aligner précisément le début de l'émission du second signal de réponse par rapport à l'arrivée de la première réponse. Par la suite, la clé électronique génère un second signal codé de réponse brouillé (pseudo aléatoire), qui est transmis au terme du traitement dans l'unité de traitement. La transmission de ce second signal codé de réponse est effectuée avec une bonne synchronisation et un haut débit de par exemple 125 Mbits/s vers le dispositif de déverrouillage.

Le dispositif de déverrouillage reçoit ce second signal codé de réponse Réponse 2, qui est brouillé (pseudo aléatoire), dans une fenêtre temporelle de réception bien synchronisée par le dispositif de déverrouillage. Par la suite une corrélation du second signal codé de réponse de la clé électronique est effectuée dans l'unité de traitement du dispositif en différé, c'est-à-dire après un temps déterminé au terme de la réception du second signal codé de réponse brouillé (pseudo aléatoire). Cette corrélation du second signal codé de réponse brouillé est effectuée en fonction d'un codage attendu de la réponse de la clé électronique. Un calcul des temps de vol des signaux entre le dispositif et la clé et entre la clé et le dispositif est encore effectué dans l'unité de traitement. Une distance entre la clé électronique et le dispositif de déverrouillage peut encore être déterminée, afin de permettre l'ouverture du véhicule, si la clé est bien reconnue et qu'elle se trouve à une distance bien déterminé à proximité du véhicule par rapport à un seuil de distance déterminé.

Avec cette troisième variante du procédé d'accès sécurisé décrit ci-dessus, cela garantit une grande sécurité. Cela permet de déterminer tout relais intermédiaire (donc délai supplémentaire de transmission) utilisé pour tenter d'ouvrir le véhicule à l'insu du titulaire de la clé électronique. Après reconnaissance de la clé électronique, le véhicule peut être ouvert un laps de temps après le traitement dans l'unité de traitement du dispositif. La durée totale T₀ depuis l'activation de la clé électronique jusqu'au traitement complet de l'information stockée dans le dispositif de déverrouillage peut être de l'ordre de 10 ms.

Selon une quatrième variante du procédé d'accès sécurisé selon la figure 5, il est prévu d'effectuer des mesures sûres de distance et de contrôle de sécurité. Tout d'abord la clé électronique est activée par le signal à basse fréquence LF transmis par le dispositif de déverrouillage. Suite au signal d'activation LF, le dispositif de déverrouillage transmet un signal de base Code, qui est un signal à code de brassage à moyen débit de l'ordre de 1 Mbits/s ou un signal à code de brassage ou aléatoire chiffré avec une clé symétrique ou asymétrique. Cette transmission du signal de base est plus longue que la transmission du signal de base des première et seconde variantes du procédé, par exemple de l'ordre de 1 ms.

La clé électronique reçoit ce signal de base codé, le démodule et le déchiffre. Comme le débit et donc la largeur de bande sont réduits lors de cette première transmission, la synchronisation à la réception du signal de base codé par la clé électronique est encore une synchronisation floue. La clé électronique effectue, dans son unité de traitement, un calcul d'erreur de fréquence du dispositif de déverrouillage à la clé électronique sur la base du signal de base à code de brassage reçu. Après ce traitement, une correction de fréquence de l'oscillateur local de la clé intervient.

Une transmission d'un premier signal codé de réponse Réponse 1 est effectuée du dispositif de déverrouillage en différé, c'est-à-dire après un temps T_{R1} déterminé suite à la transmission du signal de base à code de brassage. Ce premier signal codé de réponse est un signal à code pseudo-aléatoire de bruit PN, qui est à très haut débit par exemple de l'ordre de 125 Mbits/s. Le premier signal codé de réponse est transmis vers la clé électronique pour avoir, après corrélation dans la clé électronique, une synchronisation précise. Une mémorisation de ce signal à code PN reçu est effectuée dans un registre d'une mémoire de la clé électronique. La clé électronique reçoit ce premier signal réponse PN du dispositif de déverrouillage dans une fenêtre temporelle de réception bien définie.

A la réception de ce premier signal réponse PN, une corrélation de la première réponse du dispositif de déverrouillage avec la séquence PN déduite du code de brassage initial est effectuée dans l'unité de traitement de la clé. Cette corrélation permet de définir précisément le temps d'envoi d'un second signal à code pseudo-aléatoire de bruit PN (qui est à très haut débit par exemple de l'ordre de 125 Mbits/s), après un temps déterminé depuis la transmission du premier signal codé de réponse du dispositif à la transmission de la clé électronique. Ce temps déterminé tient compte en plus du temps fixé des temps de vol des signaux entre le dispositif et la clé et entre la clé et le dispositif. Une synchronisation précise est obtenue au moment de la transmission du second signal réponse à code pseudo-aléatoire de bruit PN, qui est à très haut débit par exemple de l'ordre de 125 Mbits/s.

Le dispositif de déverrouillage reçoit ce second signal réponse à code pseudo-aléatoire de bruit PN dans une fenêtre temporelle de réception bien synchronisée et mémorise dans un premier registre d'une mémoire l'information de la seconde réponse de la clé électronique. La durée de réception dans la fenêtre de réception du dispositif est équivalente à la durée du second signal réponse de la clé électronique. Dans l'unité de traitement du dispositif à la suite de la réception du second signal réponse de la clé, il est effectué une corrélation avec le code PN connu de la seconde réponse Réponse 2 de la clé électronique. Un calcul sûr des temps de vol est encore déterminé de manière à déterminer également la distance séparant la clé électronique du dispositif de déverrouillage pour permettre d'ouvrir le véhicule un laps de temps après si la clé électronique est reconnue. Le temps T₀ entre l'activation de la clé et l'ouverture de la porte du véhicule peut être de l'ordre de 10 ms.

Il est à noter que la durée de la deuxième réponse, qui est transmise depuis la clé à destination du véhicule, peut être plus longue que la première réponse, qui est transmise du véhicule vers la clé. De ce fait, cela permet d'avoir une augmentation du gain de corrélation, et avantageusement de réduire la puissance d'émission de la clé en conservant un rapport signal sur bruit similaire à celui de la transmission voiture clé, où il est plus aisé d'obtenir de la puissance.

Il est encore à noter que toutes les étapes des différentes variantes du procédé d'accès sécurisé décrites ci-dessus peuvent être répétées successivement pour permettre l'ouverture du véhicule uniquement à la clé électronique personnalisée audit véhicule.

A partir de la description qui vient d'être faite, plusieurs variantes du procédé et système d'accès sécurisé à un espace déterminé peuvent être conçues par l'homme du métier sans sortir du cadre de l'invention définie par les revendications. Il peut être prévu dans le dispositif d'accès ou de déverrouillage et dans la clé électronique une antenne pour la transmission à une première haute fréquence et une antenne pour la réception à une seconde haute fréquence des signaux de communication. Il est à noter que pour chaque variante du système d'accès sécurisé, plusieurs antennes commutées sont également imaginables. Cela permet ainsi, au cours de plusieurs phases successives d'opération du système sur différentes antennes, l'utilisation d'une topologie à diversité d'antennes bien connue de l'homme de métier.

## Revendications

1. Procédé d'accès sécurisé à un espace déterminé muni d'un dispositif d'accès ou de déverrouillage (2) par l'intermédiaire d'un objet portable personnalisé (3) par une communication sans fil de signaux, le dispositif d'accès ou de déverrouillage (2) comprenant un transmetteur (21) de signaux radiofréquences à haute fréquence, un récepteur (22) de signaux radiofréquences à haute fréquence, une unité de traitement (25) et un oscillateur local (23) pour cadencer les opérations du dispositif d'accès ou de déverrouillage (2), et l'objet portable (3) comprenant un transmetteur (31) de signaux radiofréquences à haute fréquence, un récepteur (32) de signaux radiofréquences à haute fréquence, une unité de traitement (35) et un oscillateur local (33) pour cadencer les opérations de l'objet portable (3),
le procédé étant **caractérisé en ce qu'**il comprend les étapes de :
- activer l'objet portable (3),
- transmettre depuis le dispositif d'accès ou de déverrouillage (2) un premier signal codé,
- recevoir le premier signal codé du dispositif d'accès ou de déverrouillage (2) dans l'objet portable (3) pour démoduler le code en définissant le temps et préparer un signal codé de réponse, afin de transmettre ce signal codé de réponse avec synchronisation au dispositif d'accès ou de déverrouillage (2) après un temps défini de transmission (T_{F}) suite à l'initiation et depuis la transmission du premier signal codé dans le dispositif d'accès ou de déverrouillage (2) et obtenu par une temporisation suite à la réception du premier signal codé et grâce à l'oscillateur local dans l'objet portable similaire à celui du dispositif,
- recevoir le signal codé de réponse de l'objet portable (3) dans le dispositif d'accès ou de déverrouillage (2),
- traiter le signal codé de réponse converti dans l'unité de traitement (25) du dispositif d'accès ou de déverrouillage (2), en contrôlant une temporisation définie et le code de réponse de l'objet portable (3), afin de déterminer les temps de vol des signaux entre le dispositif d'accès ou de déverrouillage (2) et l'objet portable (3) et en déduire la distance séparant l'objet portable (3) du dispositif d'accès ou de déverrouillage (2), pour autoriser l'accès à l'espace déterminé, si la distance calculée est en dessous d'un seuil déterminé après reconnaissance de l'objet portable (3).

2. Procédé d'accès sécurisé selon la revendication 1, **caractérisé en ce que** l'objet portable (3) est désactivé au terme de la transmission du signal codé de réponse ou juste avant le traitement du signal codé de réponse converti dans l'unité de traitement (25) du dispositif d'accès ou de déverrouillage (2).

3. Procédé d'accès sécurisé selon la revendication 1, **caractérisé en ce que** l'oscillateur local (23) du dispositif d'accès ou de déverrouillage (2) génère un signal d'oscillation à fréquence similaire au signal d'oscillation généré par l'oscillateur local (33) de l'objet portable (3).

4. Procédé d'accès sécurisé selon la revendication 1, **caractérisé en ce qu'**une temporisation est enclenchée dans le dispositif d'accès ou de déverrouillage (2) dès la transmission du premier signal codé pour permettre de contrôler la réception du signal codé de réponse de l'objet portable (3) et permettre de déterminer précisément les temps de vol des signaux et la distance séparant le dispositif d'accès ou de déverrouillage (2) et l'objet portable (3), et **en ce que** le temps défini de transmission (T_{F}) est déterminé depuis la transmission du premier signal codé.

5. Procédé d'accès sécurisé selon la revendication 1, **caractérisé en ce que** le traitement dans l'unité de traitement (25) du dispositif d'accès ou de déverrouillage (2) est effectué en différé après la réception du signal codé de réponse de l'objet portable (3).

6. Procédé d'accès sécurisé selon la revendication 1, **caractérisé en ce que** le dispositif d'accès ou de déverrouillage (2) transmet le premier signal codé, qui est un signal à code de brassage ou un signal à code pseudo-aléatoire de bruit et qui peut être chiffré avec une clé symétrique ou asymétrique, un intervalle de temps déterminé après l'activation de l'objet portable (3), ledit premier signal à code de brassage ou à code pseudo-aléatoire de bruit reçu et déchiffré par l'objet portable (3) permettant de préparer le signal codé de réponse à transmettre après le premier temps défini de transmission (T_{F}).

7. Procédé d'accès sécurisé selon la revendication 1, **caractérisé en ce que** le dispositif d'accès ou de déverrouillage (2) reçoit le signal codé de réponse de l'objet portable (3) dans une fenêtre de réception adaptée à la durée (T_{B}) du signal codé de réponse et en synchronisation avec la transmission du signal codé de réponse de l'objet portable (3).

8. Procédé d'accès sécurisé selon l'une des revendications 1 et 7, **caractérisé en ce que** le dispositif d'accès ou de déverrouillage (2) transmet le premier signal codé, qui est un signal à code de brassage ou un signal à code pseudo-aléatoire de bruit, qui peut être chiffré avec une clé symétrique ou asymétrique, et **en ce que** l'objet portable transmet un signal codé de réponse brouillé avec une modulation supplémentaire de données.

9. Procédé d'accès sécurisé selon la revendication 8, **caractérisé en ce que** la fréquence du premier signal codé transmis par une antenne (26) du dispositif d'accès ou de déverrouillage (2) et la fréquence du signal codé de réponse brouillé transmis par une antenne (36) de l'objet portable (3) sont à une valeur identique de l'ordre de 5.8 GHz, **en ce que** le premier signal codé est à haut débit de transmission de l'ordre de 26 Mbits/s ou 125 Mbits/s, et **en ce que** la modulation supplémentaire dans le signal codé de réponse brouillé est à un débit de transmission plus faible, de l'ordre de 1 Mbits/s.

10. Procédé d'accès sécurisé selon la revendication 1, **caractérisé en ce que** la fréquence du premier signal codé transmis par une antenne (26) du dispositif d'accès ou de déverrouillage (2) est à une fréquence de l'ordre de 5.8 GHz et égale à la fréquence du signal codé de réponse transmis par une antenne (36) de l'objet portable (3), et **en ce que** le premier signal codé est à haut débit de transmission de l'ordre de 26 Mbits/s ou 125 Mbits/s.

11. Procédé d'accès sécurisé selon la revendication 1, pour lequel l'oscillateur local (23) du dispositif d'accès ou de déverrouillage (2) est un oscillateur à résonateur à quartz (24), et pour lequel l'oscillateur local (33) de l'objet portable (3) est un oscillateur à résonateur à quartz (34) similaire à l'oscillateur à résonateur à quartz (24) du dispositif d'accès ou de déverrouillage (2), **caractérisé en ce que** le premier signal codé est transmis par le dispositif d'accès ou de déverrouillage (2) et reçu par l'objet portable (3), qui effectue un paramétrage pour une analyse dans l'unité de traitement (35) de l'objet portable (3), **en ce qu'**après la transmission du premier signal codé, un signal codé de réponse du dispositif (Réponse 1) brouillé par une modulation supplémentaire, est généré et transmis par le dispositif d'accès ou de déverrouillage (2) en différé (T_{R1}), **en ce que** l'objet portable reçoit le signal codé de réponse brouillé du dispositif dans une première fenêtre temporelle de réception adaptée à la durée du signal codé de réponse brouillé du dispositif, **en ce qu'**un traitement du signal codé de réponse brouillé du dispositif est effectué après conversion dans l'unité de traitement (35) de l'objet portable (3) en différé pour la génération et la transmission du signal codé de réponse de l'objet portable (Réponse 2) brouillé par une modulation supplémentaire, **en ce que** le dispositif d'accès ou de déverrouillage (2) reçoit le signal codé de réponse brouillé de l'objet portable (3) dans une seconde fenêtre de réception du dispositif adaptée à la durée du signal codé de réponse brouillé de l'objet portable (3), et **en ce qu'**un traitement du signal codé de réponse brouillé de l'objet portable (3) converti est effectué en différé dans l'unité de traitement (25) du dispositif d'accès ou de déverrouillage (2) pour le calcul des temps de vol et de la distance entre le dispositif d'accès ou de déverrouillage (2) et l'objet portable (3).

12. Procédé d'accès sécurisé selon la revendication 11, **caractérisé en ce qu'**une fois activé, l'objet portable (3) transmet un signal continu à fréquence porteuse (CW), qui est reçu par le dispositif d'accès ou de déverrouillage (2) avant la transmission du premier signal codé, **en ce qu'**un calcul d'erreur de fréquence de l'oscillateur local (33) de l'objet portable (3) par rapport à l'oscillateur local (23) du dispositif d'accès ou de déverrouillage (2), est effectué dans l'unité de traitement (25) du dispositif d'accès ou de déverrouillage (2), **en ce qu'**en parallèle au calcul d'erreur de fréquence, le premier signal codé est transmis par le dispositif d'accès ou de déverrouillage (2), et **en ce que** le signal codé de réponse brouillé du dispositif est transmis avec une requête de synchronisation précise.

13. Procédé d'accès sécurisé selon la revendication 11, **caractérisé en ce que** la fréquence des signaux transmis et reçus par le dispositif d'accès ou de déverrouillage (2) et l'objet portable (3) sont à une fréquence de l'ordre de 5.8 GHz, **en ce que** le débit de données du premier signal codé, qui est un signal à code de brassage ou à code pseudo-aléatoire de bruit, transmis par le dispositif d'accès ou de déverrouillage (2) est à 1 Mbits/s, et **en ce que** les signaux codés de réponse brouillés, qui sont définis par des signaux à code pseudo-aléatoire de bruit, sont à un débit de l'ordre de 26 Mbits/s ou 125 Mbits/s avec une modulation supplémentaire de 1 Mbits/s.

14. Procédé d'accès sécurisé selon la revendication 11, **caractérisé en ce que** le premier signal codé, qui est un signal à code de brassage du dispositif d'accès ou de déverrouillage (2), est reçu par l'objet portable (3) et un calcul d'erreur de fréquence de l'oscillateur local (23) du dispositif d'accès ou de déverrouillage (2), par rapport à l'oscillateur local (33) de l'objet portable (3) est effectué dans l'unité de traitement (35) de l'objet portable (3), **en ce que** l'unité de traitement (35) de l'objet portable (3) calcule un temps de transmission du signal codé de réponse brouillé de l'objet portable (3) depuis la transmission du signal codé de réponse brouillé reçu du dispositif d'accès ou de déverrouillage (2) pour définir une synchronisation précise lors de la transmission du signal codé de réponse brouillé de l'objet portable (3) reçu dans la seconde fenêtre de réception du dispositif.

15. Système (1) d'accès sécurisé à un espace déterminé pour la mise en oeuvre du procédé d'accès selon l'une des revendications précédentes, pour lequel le système (1) comprend un dispositif d'accès ou de déverrouillage (2), un objet portable personnalisé (3) pour une communication sans fil de signaux avec le dispositif d'accès ou de déverrouillage (2), le dispositif d'accès ou de déverrouillage (2) comprenant un transmetteur (21) de signaux radiofréquences à haute fréquence, un récepteur (22) de signaux radiofréquences à haute fréquence, une unité de traitement (25) et un oscillateur local (23) pour cadencer les opérations du dispositif d'accès ou de déverrouillage (2), et l'objet portable (3) comprenant un transmetteur (31) de signaux radiofréquences à haute fréquence, un récepteur (32) de signaux radiofréquences à haute fréquence, une unité de traitement numérique (35) et un oscillateur local (33) pour cadencer les opérations de l'objet portable (3), l'objet portable (3) étant agencé après activation pour recevoir un premier signal codé du dispositif d'accès ou de déverrouillage (2) pour démoduler le code en définissant le temps et préparer un signal codé de réponse, afin de transmettre ce signal codé de réponse avec synchronisation au dispositif d'accès ou de déverrouillage (2) après un temps défini de transmission (T_{F}) suite à l'initiation et depuis la transmission du premier signal codé dans le dispositif d'accès ou de déverrouillage (2) et obtenu par une temporisation suite à la réception du premier signal codé et grâce à l'oscillateur local dans l'objet portable similaire à celui du dispositif, afin de déterminer les temps de vol des signaux entre le dispositif d'accès ou de déverrouillage (2) et l'objet portable (3) et en déduire la distance séparant l'objet portable (3) du dispositif d'accès ou de déverrouillage (2), pour autoriser l'accès à l'espace déterminé, si la distance calculée est en dessous d'un seuil déterminé après reconnaissance de l'objet portable (3).

16. Système (1) d'accès sécurisé selon la revendication 15, **caractérisé en ce que** l'oscillateur local (23) du dispositif d'accès ou de déverrouillage (2) est un oscillateur à résonateur à quartz (24), et pour lequel l'oscillateur local (33) de l'objet portable (3) est un oscillateur à résonateur à quartz (34) similaire à l'oscillateur à résonateur à quartz (24) du dispositif d'accès ou de déverrouillage (2).

17. Système (1) d'accès sécurisé selon la revendication 15, **caractérisé en ce que** la haute fréquence des signaux radiofréquences est de l'ordre de 5.8 GHz.

18. Système (1) d'accès sécurisé selon la revendication 15, **caractérisé en ce que** le transmetteur (21) et le récepteur (22) du dispositif d'accès ou de déverrouillage (2) sont reliés par l'intermédiaire d'un élément de commutation (120) sous la forme d'un multiplexeur à une seul antenne (26) pour la transmission et la réception de signaux à haute fréquence, et **en ce que** le transmetteur (31) et le récepteur (32) de l'objet portable (3) sont reliés par l'intermédiaire d'un élément de commutation (150) sous la forme d'un multiplexeur à une seul antenne (36) pour la transmission et la réception de signaux à la même haute fréquence.

19. Système (1) d'accès sécurisé selon la revendication 15, **caractérisé en ce que** le dispositif d'accès ou de déverrouillage (2) est disposé dans un véhicule, et **en ce que** l'objet portable (3) est une clé électronique, qui peut être activée par l'action manuelle sur un bouton ou une touche de la clé électronique, ou activée par un signal de réveil à basse fréquence transmis par le dispositif d'accès ou de déverrouillage (2).

## Patentansprüche

1. Verfahren zum gesicherten Zugang zu einem bestimmten Raum, der mit einer Zugangs- oder Entriegelungsvorrichtung (2) versehen ist, mittels eines personalisierten tragbaren Objekts (3) durch drahtlose Kommunikation von Signalen, wobei die Zugangs- oder Entriegelungsvorrichtung (2) einen Sender (21) für hochfrequente Hochfrequenzsignale, einen Empfänger (22) für hochfrequente Hochfrequenzsignale, eine Verarbeitungseinheit (25) und einen lokalen Oszillator (23) zum Takten der Operationen der Zugangs- oder Entriegelungsvorrichtung (2) umfasst, und wobei das tragbare Objekt (3) einen Sender (31) für hochfrequente Hochfrequenzsignale, einen Empfänger (32) für hochfrequente Hochfrequenzsignale, eine Verarbeitungseinheit (35) und einen lokalen Oszillator (33) zum Takten der Operationen des tragbaren Objekts (3) umfasst,
und das Verfahren **gekennzeichnet ist durch** die folgenden Schritte:
- Aktivieren des tragbaren Objekts (3),
- Senden von der Zugangs- oder Entriegelungsvorrichtung (2) eines ersten codierten Signals,
- Empfangen des ersten codierten Signals der Zugangs- oder Entriegelungsvorrichtung (2) in dem tragbaren Gegenstand (3), um den Code durch Zeitbestimmung zu demodulieren und ein codiertes Antwortsignal vorzubereiten, um dieses codierte Antwortsignal synchronisiert nach einer bestimmten Übertragungszeit (T_{F}) infolge der Initiierung und seit dem Senden des ersten codierten Signals bei der Zugangs- oder Entriegelungsvorrichtung (2) an die Zugangs- oder Entriegelungsvorrichtung (2) zu senden, das durch eine Zeitverzögerung nach dem Empfang des ersten codierten Signals und dank des lokalen Oszillators an dem tragbaren Objekt, das dem der Vorrichtung ähnlich ist, erhalten wird,
- Empfangen des codierten Antwortsignals an dem tragbaren Objekt (3) bei der Zugangs- oder Entriegelungsvorrichtung (2),
- Verarbeiten des codierten Antwortsignals, das in der Verarbeitungseinheit (25) der Zugangs- oder Entriegelungsvorrichtung (2) umgewandelt wurde, durch Kontrollieren einer definierten Zeitverzögerung und des Antwortcodes des tragbaren Objekts (3), um die Laufzeiten der Signale zwischen der Zugangs- oder Entriegelungsvorrichtung (2) und dem tragbaren Objekt (3) zu bestimmen und daraus den Abstand abzuleiten, der das tragbare Objekt (3) von der Zugangs- oder Entriegelungsvorrichtung (2) trennt, um den Zugang zu dem bestimmten Raum zuzulassen, wenn der berechnete Abstand nach dem Erkennen des tragbaren Objekts (3) unter einem bestimmten Schwellenwert liegt.

2. Verfahren zum gesicherten Zugang nach Anspruch 1, **dadurch gekennzeichnet, dass** das tragbare Objekt (3) am Ende der Übertragung des codierten Antwortsignals oder kurz vor der Verarbeitung des umgewandelten codierten Antwortsignals in der Verarbeitungseinheit (25) der Zugangs- oder Entriegelungsvorrichtung (2) deaktiviert wird.

3. Verfahren zum gesicherten Zugang nach Anspruch 1, **dadurch gekennzeichnet, dass** der lokale Oszillator (23) der Zugangs- oder Entriegelungsvorrichtung (2) ein Oszillationssignal mit einer Frequenz erzeugt, die dem Oszillationssignal ähnlich ist, das von dem lokalen Oszillator (33) des tragbaren Objekts (3) erzeugt wird.

4. Verfahren zum gesicherten Zugang nach Anspruch 1, **dadurch gekennzeichnet, dass** eine Zeitverzögerung in der Zugangs- oder Entriegelungsvorrichtung (2) nach dem Senden des ersten codierten Signals ausgelöst wird, um den Empfang des codierten Antwortsignals des tragbaren Objekts (3) steuern zu können und um die Laufzeiten der Signale und den Abstand zwischen der Zugangs- oder Entriegelungsvorrichtung (2) und dem tragbaren Objekt (3) genau bestimmen zu können, und dass die definierte Übertragungszeit (T_{F}) seit dem Senden des ersten codierten Signals bestimmt wird.

5. Verfahren zum gesicherten Zugang nach Anspruch 1, **dadurch gekennzeichnet, dass** die Verarbeitung in der Verarbeitungseinheit (25) der Zugangs- oder Entriegelungsvorrichtung (2) zeitversetzt nach dem Empfang des codierten Antwortsignals von dem tragbaren Objekt (3) durchgeführt wird.

6. Verfahren zum gesicherten Zugang nach Anspruch 1, **dadurch gekennzeichnet, dass** die Zugangs- oder Entriegelungsvorrichtung (2) das erste codierte Signal sendet, das ein Signal mit einem Mischcode oder ein Signal mit einem pseudozufälligem Rauschcode ist, das mit einem symmetrischen oder asymmetrischen Schlüssel verschlüsselt werden kann, nach einem bestimmten Zeitintervall nach der Aktivierung des tragbaren Objekts (3) erlaubt das erste Signal mit einem Mischcode oder mit einem Code mit pseudozufälligem Rauschen, das von dem tragbaren Objekt (3) empfangen und entschlüsselt wird, das codierte Antwortsignal vorzubereiten, das nach der ersten bestimmten Übertragungszeit (T_{F}) gesendet werden soll.

7. Verfahren zum gesicherten Zugang nach Anspruch 1, **dadurch gekennzeichnet, dass** die Zugangs- oder Entriegelungsvorrichtung (2) das codierte Antwortsignal des tragbaren Objekts (3) in einem Empfangsfenster empfängt, das an die Dauer (T_{B}) des codierten Antwortsignals angepasst ist, und synchron mit der Übertragung des codierten Antwortsignals des tragbaren Objekts (3) erfolgt.

8. Verfahren zum gesicherten Zugang nach einem der Ansprüche 1 bis 7, **dadurch gekennzeichnet, dass** die Zugangs- oder Entriegelungsvorrichtung (2) das erste codierte Signal überträgt, das ein Signal mit einem Mischcode oder ein Signal mit einem Code mit pseudozufälligem Rauschen ist und mit einem symmetrischen oder asymmetrischen Schlüssel verschlüsselt sein kann, und dass das tragbare Objekt ein verrauschtes codiertes Antwortsignal mit zusätzlicher Datenmodulation überträgt.

9. Verfahren zum gesicherten Zugang nach Anspruch 8, **dadurch gekennzeichnet, dass** die Frequenz des ersten codierten Signals, das von einer Antenne (26) der Zugangs- oder Entriegelungsvorrichtung (2) gesendet wird, und die Frequenz des verrauschten codierten Antwortsignals, das von einer Antenne (36) des tragbaren Objekts (3) gesendet wird, bei einem identischen Wert in der Größenordnung von 5,8 GHz liegt, dass das erste codierte Signal eine hohe Übertragungsrate in der Größenordnung von 26 Mbit/s oder 125 Mbit/s hat und dass die zusätzliche Modulation in dem verrauschten codierten Antwortsignal eine niedrigere Übertragungsrate in der Größenordnung von 1 Mbit/s hat.

10. Verfahren zum gesicherten Zugang nach Anspruch 1, **dadurch gekennzeichnet, dass** die Frequenz des von einer Antenne (26) übertragenen ersten codierten Signals der Zugangs- oder Entriegelungsvorrichtung (2) eine Frequenz in der Größenordnung von 5,8 GHz hat und gleich der Frequenz des codierten Antwortsignals ist, das von einer Antenne (36) des tragbaren Objekts (3) gesendet wird, und dass das erste codierte Signal eine hohe Übertragungsrate in der Größenordnung von 26 Mbit/s oder 125 Mbit/s besitzt.

11. Verfahren zum gesicherten Zugang nach Anspruch 1, bei dem der lokale Oszillator (23) der Zugangs- oder Entriegelungsvorrichtung (2) ein Quarzresonanz-Oszillator (24) ist und wobei der lokale Oszillator (33) des tragbaren Objekts (3) ein Quarzresonanz-Oszillator (34) ist, der zu dem Quarzresonanz-Oszillator (24) der Zugangs- oder Entriegelungsvorrichtung (2) ähnlich ist, **dadurch gekennzeichnet, dass** das erste codierte Signal von der Zugangs- oder Entriegelungsvorrichtung (2) gesendet und von dem tragbaren Objekt (3), das eine Parametrisierung zur Analyse in der Verarbeitungseinheit (35) des tragbaren Objekts (3) vornimmt, empfangen wird, und dass nach der Übertragung des ersten codierten Signals ein codiertes Antwortsignal der Vorrichtung (Antwort 1), das durch eine zusätzliche Modulation verrauscht ist, erzeugt wird und von der Zugangs- oder Entriegelungsvorrichtung (2) zeitversetzt (T_{R1}) gesendet wird, dass das tragbare Objekt (3) das verrauschte codierte Antwortsignal der Vorrichtung in einem ersten Empfangszeitfenster, das an die Dauer des verrauschten codierten Antwortsignals der Vorrichtung angepasst ist, empfängt, dass eine Verarbeitung des verrauschten codierten Antwortsignals der Vorrichtung nach der Umwandlung in der Verarbeitungseinheit (35) des tragbaren Objekts (3) in unterschiedlicher Weise ausgeführt wird, um das codierte Antwortsignal des tragbaren Objekts (Antwort 2), das durch eine zusätzliche Modulation verrauscht ist, zu erzeugen und zu übertragen, dass die Zugangs- oder Entriegelungsvorrichtung (2) das verrauschte codierte Antwortsignal des tragbaren Objekts (3) in einem zweiten Empfangsfenster der Vorrichtung, das an die Dauer des verrauschten codierten Antwortsignals des tragbaren Objekts (3) angepasst ist, empfängt und dass eine Verarbeitung des umgewandelten verrauschten codierten Antwortsignals des tragbaren Objekts (3) in der Verarbeitungseinheit (25) der Zugangs- oder Entriegelungsvorrichtung (2) für die Berechnung der Laufzeit und des Abstands zwischen der Zugangs- oder Entriegelungsvorrichtung (2) und dem tragbaren Objekt (3) zeitversetzt durchgeführt wird.

12. Verfahren zum gesicherten Zugang nach Anspruch 11, **dadurch gekennzeichnet, dass** das tragbare Objekt (3), sobald es aktiviert ist, ein kontinuierliches Signal (CW) der Trägerfrequenz sendet, das von der Zugangs- oder Entriegelungsvorrichtung (2) vor dem Senden des ersten codierten Signals empfangen wird, dass eine Berechnung des Frequenzfehlers des lokalen Oszillators (33) des tragbaren Objekts (3) in Bezug auf den lokalen Oszillator (23) der Zugangs- oder Entriegelungsvorrichtung (2) in der Verarbeitungseinheit (25) der Zugangs- oder Entriegelungsvorrichtung (2) durchgeführt wird, dass parallel zu der Frequenzfehlerberechnung das erste codierte Signal von der Zugangs- oder Entriegelungsvorrichtung (2) gesendet wird und dass das verrauschte codierte Antwortsignal der Vorrichtung zusammen mit einer präzisen Synchronisationsanfrage gesendet wird.

13. Verfahren zum gesicherten Zugang nach Anspruch 11, **dadurch gekennzeichnet, dass** die Frequenz der von der Zugangs- oder Entriegelungsvorrichtung (2) und von dem tragbaren Objekt (3) gesendeten und empfangenen Signale gleich einer Frequenz in der Größenordnung von 5,8 GHz ist, dass der Datenrate des ersten codierten Signals, das ein Signal mit einem Mischcode oder mit einem Code mit pseudozufälligem Rauschen ist, das von der Zugangs- oder Entriegelungsvorrichtung (2) gesendet wird, 1 Mbit/s beträgt und dass die verrauschten codierten Antwortsignale, die durch die Signale mit einem Code mit pseudozufälligem Rauschen definiert sind, eine Rate in der Größenordnung von 26 Mbit/s oder 125 Mbit/s mit zusätzlicher Modulation von 1 Mbit/s besitzen.

14. Verfahren zum gesicherten Zugang nach Anspruch 11, **dadurch gekennzeichnet, dass** das erste codierte Signal, das ein Signal mit einem Mischcode der Zugangs- oder Entriegelungsvorrichtung (2) ist, von dem tragbaren Objekt (3) empfangen wird und eine Berechnung eines Frequenzfehlers des lokalen Oszillators (23) der Zugangs- oder Entriegelungsvorrichtung (2) in Bezug auf den lokalen Oszillator (33) des tragbaren Objekts (3) in der Verarbeitungseinheit (35) des tragbaren Gegenstands (3) ausgeführt wird, dass die Verarbeitungseinheit (35) des tragbaren Objekts (3) eine Übertragungszeit des verrauschten codierten Antwortsignals von dem tragbaren Objekt (3) seit dem Senden des von der Zugangs- oder Entriegelungsvorrichtung (2) empfangenen verrauschten codierten Antwortsignals berechnet, um eine genaue Synchronisation beim Übertragen des verrauschten codierten Antwortsignals von dem tragbaren Objekt (3), das in dem zweiten Empfangsfenster der Vorrichtung empfangen wird, festzulegen.

15. System (1) zum gesicherten Zugang zu einem bestimmten Raum zum Ausführen des Zugangsverfahrens nach einem der vorhergehenden Ansprüche, wobei das System (1) eine Zugangs- oder Entriegelungsvorrichtung (2) und ein personalisiertes tragbares Objekt (3) für eine drahtlose Kommunikation von Signalen mit der Zugangs- oder Entriegelungsvorrichtung (2) umfasst, wobei die Zugangs- oder Entriegelungsvorrichtung (2) einen Sender (21) für hochfrequente Hochfrequenzsignale, einen Empfänger (22) für hochfrequente Hochfrequenzsignale, eine Verarbeitungseinheit (25) und einen lokalen Oszillator (23) zum Takten der Operationen der Zugangs- oder Entriegelungsvorrichtung (2) enthält und wobei das tragbare Objekt (3) einen Sender (31) für hochfrequente Hochfrequenzsignale, eine digitale Verarbeitungseinheit (35) und einen lokalen Oszillator (33) zum Takten der Operationen des tragbaren Objekts (3) umfasst, wobei das tragbare Objekt (3) dafür ausgelegt ist, nach seiner Aktivierung ein erstes codiertes Signal von der Zugangs- oder Entriegelungsvorrichtung (2) zu empfangen, um den Code durch Zeitbestimmung zu demodulieren und um ein codiertes Antwortsignal vorzubereiten, um dieses codierte Antwortsignal nach einer definierten Übertragungszeit (T_{F}) anschließend an die Initiierung und von der Übertragung des ersten codierten Signals in der Zugangs- oder Entriegelungsvorrichtung (2) synchron zu der Zugangs- oder Entriegelungsvorrichtung (2) zu senden, das mit einer Zeitverzögerung nach dem Empfang des ersten codierten Signals und dank des lokalen Oszillators in dem tragbaren Objekt, der dem der Vorrichtung ähnlich ist, erhalten wird, um die Laufzeiten der Signale zwischen der Zugangs- oder Entriegelungsvorrichtung (2) und dem tragbaren Objekt (3) zu bestimmen und um daraus den Abstand, der das tragbare Objekt (3) von der Zugangs- oder Entriegelungsvorrichtung (2) trennt, abzuleiten, um den Zugang zu dem bestimmten Raum zuzulassen, wenn der berechnete Abstand nach der Erkennung des tragbaren Objekts (3) unter einem vorgegebenen Schwellenwert liegt.

16. System (1) zum gesicherten Zugang nach Anspruch 15, **dadurch gekennzeichnet, dass** der lokale Oszillator (23) der Zugangs- oder Entriegelungsvorrichtung (2) ein Oszillator (24) mit Quarzresonator ist, wobei der lokale Oszillator (33) des tragbaren Objekts (3) ein Oszillator (34) mit Quarzresonator ist, der dem Oszillator (24) mit Quarzresonator der Zugangs- oder Entriegelungsvorrichtung (2) ähnlich ist.

17. System (1) zum gesicherten Zugang nach Anspruch 15, **dadurch gekennzeichnet, dass** die hohe Frequenz der Hochfrequenzsignale in der Größenordnung von 5,8 GHz liegt.

18. System (1) zum gesicherten Zugang nach Anspruch 15, **dadurch gekennzeichnet, dass** der Sender (21) und der Empfänger (22) der Zugangs- oder Entriegelungsvorrichtung (2) über ein Kommutationselement (120) in Form eines Multiplexers (26) mit einer einzigen Antenne zum Senden und Empfangen von Hochfrequenzsignalen verbunden sind und dass der Sender (31) und der Empfänger (32) des tragbaren Gegenstands (3) über ein Kommutationselement (150) in Form eines Multiplexers (36) mit einer einzigen Antenne zum Senden und Empfangen von Signalen mit der gleichen hohen Frequenz verbunden sind.

19. System (1) zum gesicherten Zugang nach Anspruch 15, **dadurch gekennzeichnet, dass** die Zugangs- oder Entriegelungsvorrichtung (2) in einem Fahrzeug angeordnet ist und dass das tragbare Objekt (3) ein elektronischer Schlüssel ist, der durch ein manuelles Betätigen eines Knopfes oder einer Taste des elektronischen Schlüssels aktiviert werden kann oder durch ein niederfrequentes Wecksignal, das von der Zugangs- oder Entriegelungsvorrichtung (2) gesendet wird, aktiviert werden kann.

## Claims

1. Process for secure access to a determined space equipped with an access or unlocking device (2) by means of a customised wearable object (3) through a wireless signal communication, wherein the access or unlocking device (2) comprises a transmitter (21) of radiofrequency signals at high frequency, a receiver (22) of radiofrequency signals at high frequency, a processing unit (25) and a local oscillator (23) for clocking the operations of the access or unlocking device (2), and the wearable object (3) comprises a transmitter (31) of radiofrequency signals at high frequency, a receiver (32) of radiofrequency signals at high frequency, a processing unit (35) and a local oscillator (33) for clocking the operations of the wearable object (3),
wherein the process is **characterised in that** it comprises the steps of:
- activating the wearable object (3),
- transmitting a first coded signal from the access or unlocking device (2),
- receiving the first coded signal from the access or unlocking device (2) in the wearable object (3) to demodulate the code by defining time and preparing a coded response signal, in order to transmit this coded response signal with synchronisation to the access or unlocking device (2) after a defined time of transmission (T_{F}) following initiation and as of the transmission of the first coded signal in the access or unlocking device (2) and obtained by time counting following reception of the first coded signal and thanks to the local oscillator in the wearable object similar to that one of the device,
- receiving the coded response signal from the wearable object (3) in the access or unlocking device (2),
- processing the converted coded response signal in the processing unit (25) of the access or unlocking device (2), by checking the defined time delay and the response code of the wearable object (3), in order to determine the flight times of the signals between the access or unlocking device (2) and the wearable object (3) and deducing therefrom the distance separating the wearable object (3) and the access or unlocking device (2), to authorise access to the determined space, if the calculated distance is below a determined threshold after recognition of the wearable object (3).

2. Secure access process according to claim 1, **characterised in that** the wearable object (3) is deactivated at the end of the transmission of the coded response signal or just before the processing of the converted coded response signal in the processing unit (25) of the access or unlocking device (2).

3. Secure access process according to claim 1, **characterised in that** the local oscillator (23) of the access or unlocking device (2) generates an oscillation signal at a frequency similar to the oscillation signal generated by the local oscillator (33) of the wearable object (3).

4. Secure access process according to claim 1, **characterised in that** a time delay is started into the access or unlocking device (2) on transmission of the first coded signal to allow reception of the coded response signal of the wearable object (3) to be checked and to allow the flight times of the signals and the distance separating the access or unlocking device (2) and the wearable object (3) to be determined precisely, and **in that** the defined time of transmission (T_{F}) is determined from the transmission of the first coded signal.

5. Secure access process according to claim 1, **characterised in that** the processing in the processing unit (25) of the access or unlocking device (2) is conducted with time delay after reception of the coded response signal from the wearable object (3).

6. Secure access process according to claim 1, **characterised in that** the access or unlocking device (2) transmits the first coded signal, which is a rolling code signal or a pseudo-random noise coded signal and which can be encrypted with a symmetric or asymmetric key, with a determined time interval after activation of the wearable object (3), wherein said first rolling code or pseudo-random noise coded signal received and decrypted by the wearable object (3) enables preparation of the coded response signal to be transmitted after the first defined time of transmission (T_{F}).

7. Secure access process according to claim 1, **characterised in that** the access or unlocking device (2) receives the coded response signal from the wearable object (3) in a reception window adjusted to the duration (T_{B}) of the coded response signal and synchronised with the transmission of the coded response signal from the wearable object (3).

8. Secure access process according to one of claims 1 and 7, **characterised in that** the access or unlocking device (2) transmits the first coded signal, which is a rolling code signal or a pseudo-random noise coded signal, which can be encrypted with a symmetric or asymmetric key, and **in that** the wearable object transmits a scrambled coded response signal with an additional modulation of data.

9. Secure access process according to claim 8, **characterised in that** the frequency of the first coded signal transmitted through an antenna (26) of the access or unlocking device (2) and the frequency of the scrambled coded response signal transmitted through an antenna (36) of the wearable object (3) are identical in value in the range of 5.8 GHz, **in that** the first coded signal is at a high transmission rate in the range of 26 Mbits/s or 125 Mbits/s, and **in that** the additional modulation in the scrambled coded response signal is at a lower transmission rate in the range of 1 Mbits/s.

10. Secure access process according to claim 1, **characterised in that** the frequency of the first coded signal transmitted through an antenna (26) of the access or unlocking device (2) is at a frequency in the range of 5.8 GHz and equal to the frequency of the coded response signal transmitted through an antenna (36) of the wearable object (3), and **in that** the first coded signal is at a high transmission rate in the range of 26 Mbits/s or 125 Mbits/s.

11. Secure access process according to claim 1, wherein the local oscillator (23) of the access or unlocking device (2) is a quartz crystal (24) oscillator, and wherein the local oscillator (33) of the wearable object (3) is a quartz crystal (34) oscillator similar to the quartz crystal (24) of the access or unlocking device (2), **characterised in that** the first coded signal is transmitted by the access or unlocking device (2) and received by the wearable object (3), which conducts a parameterisation for an analysis in the processing unit (35) of the wearable object (3), **in that** after the transmission of the first coded signal, a coded response signal of the device (Response 1) scrambled by an additional modulation, is generated and transmitted by the access or unlocking device (2) with time delay (T_{R1}), **in that** the wearable object receives the scrambled coded response signal from the device in a first time window for reception adjusted to the duration of the scrambled coded response signal of the device, **in that** a processing of the scrambled coded response signal of the device is conducted after conversion in the processing unit (35) of the wearable object (3) with time delay for the generation and transmission of the coded response signal from the wearable object (Response 2) scrambled by an additional modulation, **in that** the access or unlocking device (2) receives the scrambled coded response signal from the wearable object (3) in a second time window for reception of the device adjusted to the duration of the scrambled coded response signal from the wearable object (3), and **in that** a processing of the converted scrambled coded response signal of the wearable object (3) is conducted with time delay in the processing unit (25) of the access or unlocking device (2) for calculation of the flight times and the distance between the access or unlocking device (2) and the wearable object (3).

12. Secure access process according to claim 11, **characterised in that** once activated, the wearable object (3) transmits a continuous carrier frequency signal (CW), which is received by the access or unlocking device (2) before transmission of the first coded signal, **in that** a calculation of frequency error of the local oscillator (33) of the wearable object (3) in relation to the local oscillator (23) of the access or unlocking device (2) is conducted in the processing unit (25) of the access or unlocking device (2), **in that** in parallel with the frequency error calculation, the first coded signal is transmitted by the access or unlocking device (2), and **in that** the scrambled coded response signal of the device is transmitted with a precise synchronisation request.

13. Secure access process according to claim 11, **characterised in that** the frequency of the signals transmitted and received by the access or unlocking device (2) and the wearable object (3) are at a frequency in the range of 5.8 GHz, **in that** the data transfer rate of the first coded signal, which is a rolling code signal or a pseudo-random noise coded signal transmitted by the access or unlocking device (2), is of 1 Mbits/s, and **in that** the scrambled coded response signals, which are defined by pseudo-random noise coded signals, are at a transfer rate in the range of 26 Mbits/s or 125 Mbits/s with an additional modulation of 1 Mbits/s.

14. Secure access process according to claim 11, **characterised in that** the first coded signal, which is a rolling code signal of the access or unlocking device (2), is received by the wearable object (3) and a calculation of frequency error of the local oscillator (23) of the access or unlocking device (2) in relation to the local oscillator (33) of the wearable object (3) is conducted in the processing unit (35) of the wearable object (3), **in that** the processing unit (35) of the wearable object (3) calculates a transmission time of the scrambled coded response signal of the wearable object (3) from the transmission of the scrambled coded response signal of the access or unlocking device (2) to define a precise synchronisation during the transmission of the scrambled coded response signal of the wearable object (3) received in the second reception window of the device.

15. System (1) for secure access to a determined space for implementing the access process according to one of the preceding claims, in which the system (1) comprises an access or unlocking device (2), a customised wearable object (3) for a wireless signal communication with the access or unlocking device (2), wherein the access or unlocking device (2) comprises a transmitter (21) of radiofrequency signals at high frequency, a receiver (22) of radiofrequency signals at high frequency, a processing unit (25) and a local oscillator (23) for clocking the operations of the access or unlocking device (2), and the wearable object (3) comprises a transmitter (31) of radiofrequency signals at high frequency, a receiver (32) of radiofrequency signals at high frequency, a processing unit (35) and a local oscillator (33) for clocking the operations of the wearable object (3), the wearable object (3) being arranged after activation to receive a first coded signal from the access or unlocking device (2) to demodulate the code by defining time and preparing a coded response signal, in order to transmit this coded response signal with synchronisation to the access or unlocking device (2) after a defined time of transmission (T_{F}) following initiation and as of the transmission of the first coded signal in the access or unlocking device (2) and obtained by time counting following reception of the first coded signal and thanks to the local oscillator in the wearable object similar to that one of the device, in order to determine the flight times of the signals between the access or unlocking device (2) and the wearable object and deducing therefrom the distance separating the wearable object (3) and the access or unlocking device (2), to authorise access to the determined space, if the calculated distance is below a determined threshold after recognition of the wearable object (3).

16. Secure access system (1) according to claim 15, **characterised in that** the local oscillator (23) of the access or unlocking device (2) is a quartz crystal (24) oscillator, and for which the local oscillator (33) of the wearable object (3) is a quartz crystal (34) oscillator similar to the quartz crystal (24) of the access or unlocking device (2).

17. Secure access system (1) according to claim 15, **characterised in that** the high frequency of the radiofrequency signals is in the range of 5.8 GHz.

18. Secure access system (1) according to claim 15, **characterised in that** the transmitter (21) and the receiver (22) of the access or unlocking device (2) are connected by means of a switching element (120) in the form of a multiplexer with a single antenna (26) for the transmission and reception of signals at high frequency, and **in that** the transmitter (31) and the receiver (32) of the wearable object (3) are connected by means of a switching element (150) in the form of a multiplexer with a single antenna (36) for the transmission and reception of signals at the same high frequency.

19. Secure access system (1) according to claim 15, **characterised in that** the access or unlocking device (2) is arranged in a vehicle, and **in that** the wearable object (3) is an electronic key, which can be activated by manual action on a button or touch of the electronic key, or activated by a low- frequency wake up signal transmitted by the access or unlocking device (2).
